# EUROPEAN PATENT APPLICATION

(11) **EP 1 469 541 A2**
(43) Date of publication of application: **20.10.2004**
(21) Application number: 04251816.7
(22) Date of filing: 26.03.2004
(51) Int. Cl.: H01M 8/02, H01M 8/24

(54) **Unit cell for fuel cell and fuel cell therewith**

(30) Priority: 15.04.2003 JP 2003109991
(71) Applicant: Nec Tokin Corporation, Sendai-shi, Miyagi (JP)
(72) Inventor: Mizukoshi, Takashi, c/o NEC TOKIN Corporation, Sendai-shi Miyagi (JP); Nishiyama, Toshihiko, c/o NEC TOKIN Corporation, Sendai-shi Miyagi (JP); Shimizu, Kunihiko, c/o NEC TOKIN Corporation, Sendai-shi Miyagi (JP); Sasaki, Masayuki, c/o NEC TOKIN Corporation, Sendai-shi Miyagi (JP)
(74) Representative: W.P. THOMPSON & CO.

(57) **Abstract**

The invention provides for a unit cell for a fuel cell including a membrane electrode assembly (3) comprising an electrolyte membrane and a pair of electrodes (2) sandwiching the electrolyte membrane (1) on its sides and with conductive wires (5) forcedly contacting the sides of the membrane electrode assembly; and a frame support (4) for fixing the conductive wire such that the membrane electrode assembly can be fixed by uniform clamping for smooth feeding of reactants and discharge of products, to provide a unit cell for a fuel cell having a structure exhibiting good battery properties with a low cost.

## Description

The present invention relates to a unit cell for a fuel cell and to a fuel cell comprising the unit cell as a component thereof. In particular, the invention can relate to a fixing structure for a membrane electrode assembly constituting a solid polymer type fuel cell, a current collector structure and an interconnection structure between unit cells.

A fuel cell is an electric generator in which utilizing a reverse reaction to electrolysis of water, hydrogen and oxygen are reacted to generate a current. Since it exhibits a higher efficiency compared with a conventional electric generator and a product during power generation is water, a fuel cell has been technically investigated in diverse ways and practically used, in expectation of effects on resource saving and environmental protection.

A basic structure of a fuel cell comprises an electrolyte membrane for transporting hydrogen ions, a fuel and an oxygen electrode placed in the sides of the electrolyte membrane, a current collector for taking electric power from the electrodes, and a separator separating feeding lines for a fuel and oxygen (or air) to the electrodes and electrically interconnecting unit cells.

Fuel cells may be categorized into different types such as a fused carbonate, a solid oxide, a phosphate and a solid polymer types, depending on a type of electrolyte. One of the properties determining an application of such a fuel cell is an operation temperature. Particularly, a solid polymer type cell has attracted attention because of its operating temperature as low at about 80 °C and has been expected to be applicable to mobile devices.

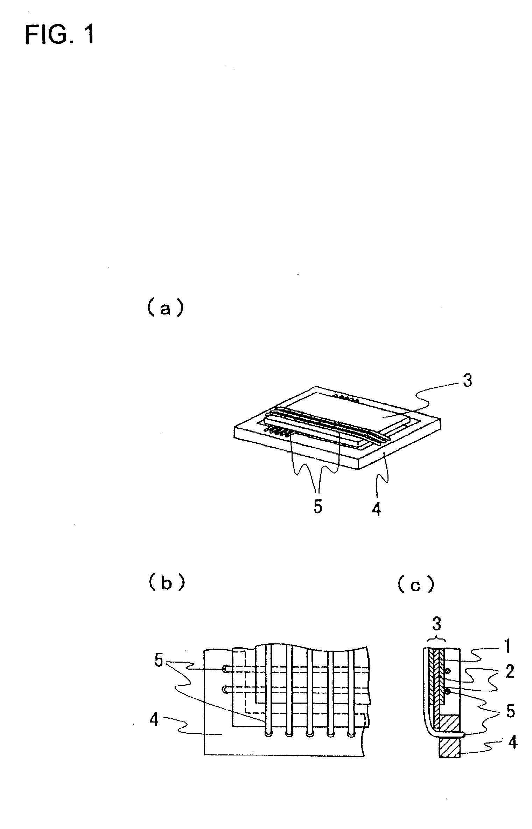

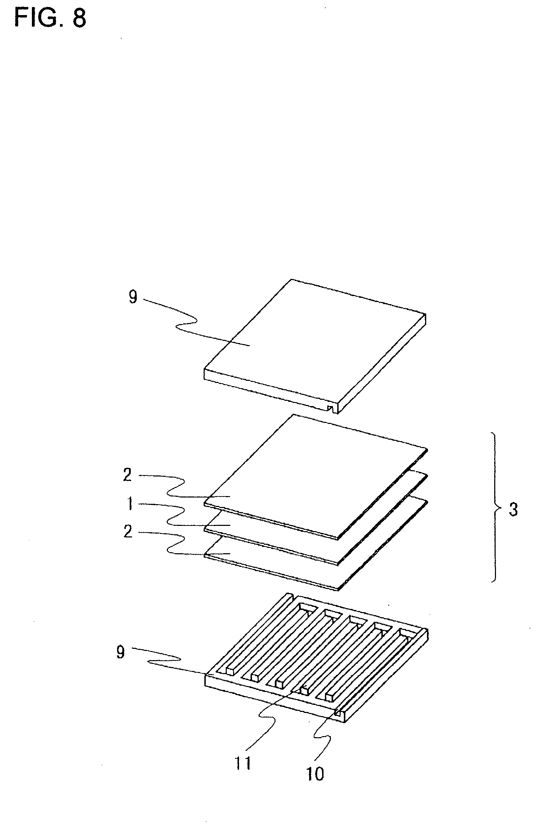

FIG. 8 is a perspective view showing a basic structure of a conventional unit cell for a solid polymer type fuel cell. In FIG. 8, 1 denotes a solid polymer electrolyte membrane, 2 denotes an electrode, and these electrodes 2 are assembled such that the solid polymer electrolyte membrane 1 is sandwiched by these electrodes to give a membrane electrode assembly (hereinafter, abbreviated as "MEA") 3. Each of the electrodes 2 is a laminate of a catalyst and a diffusion layers. Feeding a fuel (hydrogen) to one electrode and oxygen (or air) to the other electrode causes an electrochemical reaction to generate electric power.

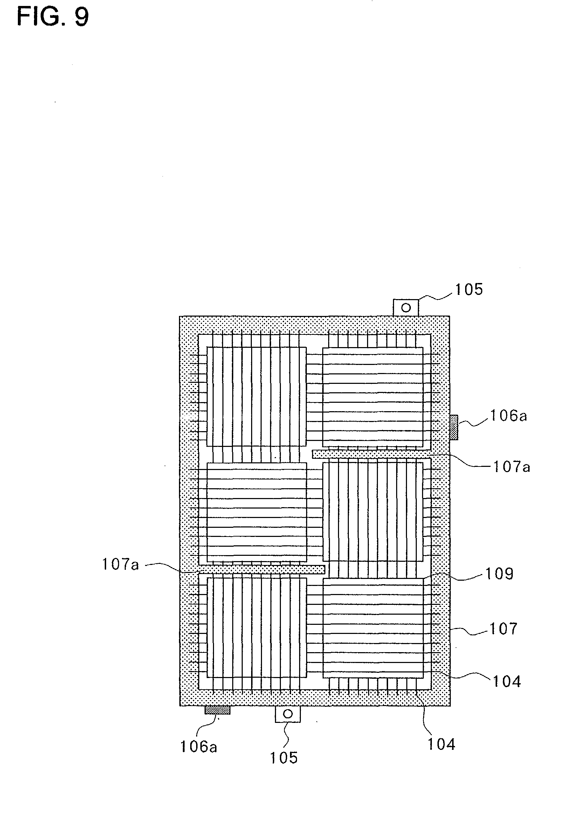

In FIG. 8, 9 denotes a separator, in which trenches 10 are formed in the whole surface adjacent to the MEA. These separators 9 sandwich the MEA from both sides and the resulting assembly is fixed by applying a pressure. The separators are also responsible for feeding the reactants (fuel, oxygen) to the electrode surfaces, discharging products and collecting electric power. The separator is made of, for example, graphite or stainless steel because it must be conductive.

A convex 11 in the separator to be in contact with the MEA surface is responsible for pressing the MEA and for uniform pressing, its shape has been extensively investigated in conjunction with the shape of the trench 10.

If there emerges an area in an interface between the MEA and the separator to which an excessive pressure to the MEA is applied, it may interfere with feeding of reactants to the area or diffusion of products to be discharged. Therefore, pressing of the MEA with the separators should be as uniform as possible. However, when a separator structure becomes more complex in an attempt to achieve uniform pressing, it may lead to an increased manufacturing cost. The need has therefore been identified to provide a structure where uniform pressing can be achieved without making a separator structure complex.

Japanese unexamined patent publication No. 2002-343376 (Patent reference 1) discloses a separator for a fuel cell having a structure where a metal plate with a slit is attached to a flat metal plate. Forming a slit is easier than forming a trench in a flat plate and a notch is made for dealing with thermal stress. However, such a structure cannot sufficiently solve the above problems.

Meanwhile, it is common that a plurality of the above unit cells are interconnected to form a stack structure and depending on a desired output.

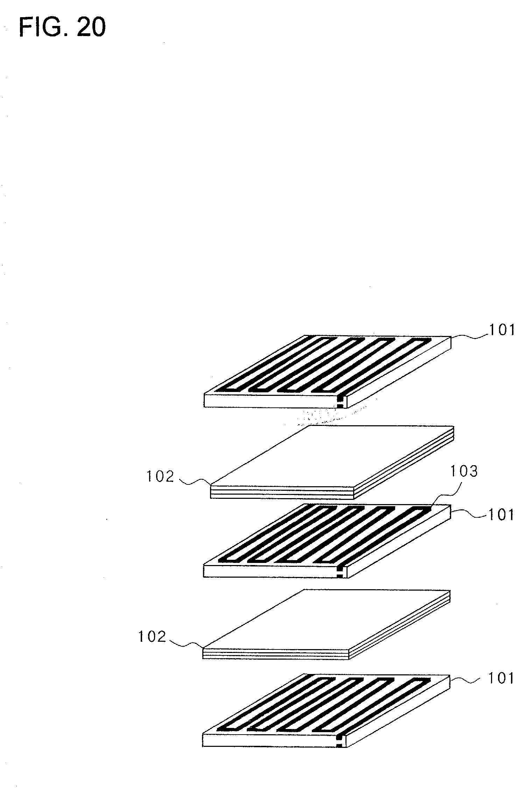

FIG. 20 shows a laminated stack structure. In this figure, 101 denotes a separator, 102 denotes a membrane electrode assembly (MEA) and 103 denotes a channel trench. A separator used in the laminated stack structure comprises a fuel feeding trench for feeding a fuel to one adjacent unit cell in one side and an oxygen feeding trench for feeding oxygen to the other adjacent unit cell in the other side.

Such a laminated stack structure requires a separator between each pair of unit cells, leading to a larger battery size and thus to difficulty in size or weight reduction.

Alternatively, there has been proposed a flat stack structure for a mobile device such as a cellular telephone and a notebook computer, where MEAs aligned in a flat plane are connected. Such a flat stack structure is particularly promising for applications requiring a structure as thin as possible, but not requiring a very high electromotive force.

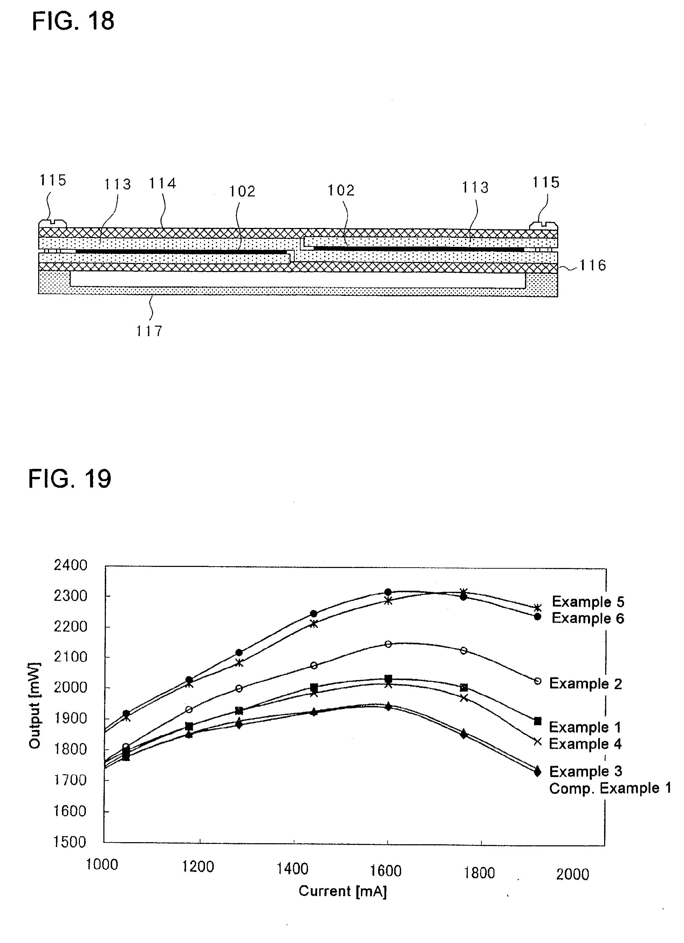

FIG. 18 shows a conventional flat stack structure. Here, 102 denotes an MEA, 113 denotes a stainless plate electrode, 114 denotes a pressure plate, 115 denotes a screw, 116 denotes a support plate and 117 denotes an insulating box. As shown in the figure, halves of stepped stainless plate electrodes 113 are alternately laminated via a sheet of MEA 102, and adjacent MEAs are connected in series. The stainless plate electrodes and the MEAs therebetween are placed on a support plate on the insulating box 107. These are fixed, through a pressure plate 114 thereon, by screws 115. Each of the stainless plate electrodes 113, the pressure plate 114 and the support plate 116 has a slit through-hole, via which reactants (a fuel, oxygen) are fed to the MEA surface.

Important factors for a flat stack structure include the shape of a current collecting electrode for current-collecting from MEAs, feeding of reactants (a fuel, oxygen), discharge of products (water, carbon dioxide), an electric resistance in an electric contact and prevention of defective electric connection due to inadequate MEA fixing.

Conventional flat stack structures have been disclosed in, for example, Japanese unexamined patent publication Nos. 2002-56855 (Patent reference 2), 2003-173813 (Patent reference 3) and 2003-203647 (Patent reference 4).

For a conventional flat stack structure, it is necessary to reduce a contact resistance between an MEA and a current collecting electrode by clamping them using a fixing member such as a pressure plate and screws. Thus, such a fixing member contributes to an increase in volume or weight, which places a limit on size or weight reduction. In an application where unit cells are interconnected by circuit board technique, a higher discharge current may lead to a higher electric resistance due to a narrow connection, resulting in unsatisfactory battery properties.

According to one aspect of the present invention there is provided a unit cell for a fuel cell comprising a membrane electrode assembly comprising an electrolyte membrane and a pair of electrodes sandwiching the electrolyte membrane on its sides; conductive wires forcedly contact with the sides of the membrane electrode assembly; and a frame support for fixing the conductive wire.

The invention is advantageous in providing for a unit cell for a fuel cell having a simple structure in which MEAs are fixed by uniform clamping and which can realize smooth reactant feeding and product discharge to exhibit good battery properties with a low cost, as well as a fuel cell therewith.

A fuel cell having a flat stack structure permitting easy size and weight reduction, exhibiting good battery properties is also advantageously provided.

In the unit cell for a fuel cell as described above the conductive wires can forcedly contact with one side and the other side of the membrane electrode assembly are fixed on the same support.

Advantageously the conductive wire acts as a current collector.

The invention can further comprise a unit cell for a fuel cell comprising:
a membrane electrode assembly comprising an electrolyte membrane and a pair of electrodes sandwiching the electrolyte membrane on its sides;
a frame support;
a first conductive wire intersecting the region within the frame multiple times, which is fixed on the frame support in one side of the support; and
a second conductive wire crosses over the first conductive wire and intersecting the region within the frame multiple times, which is fixed on the frame support in the side in which the first conductive wire is disposed;
wherein one side of the membrane electrode assembly is clamped with the first conductive wire while the other side is clamped with the second conductive wire so that the membrane electrode assembly is fixed between the first and the second conductive wires.

The membrane electrode assembly is preferably disposed such that the whole periphery of the electrolyte membrane is superposed on the support.

According to another aspect the invention provides for a unit cell for a fuel cell comprising:
a membrane electrode assembly comprising an electrolyte membrane and a pair of electrodes sandwiching the electrolyte membrane on its sides;
a first and a second frame supports;
a first conductive wire intersecting the region within the frame multiple times, which is fixed on the first frame support in one side of the frame support;
a second conductive wire intersecting the region within the frame multiple times, which is fixed on the second frame support in one side of the frame support;
wherein the membrane electrode assembly is disposed between the first and the second conductive wires; and the first and the second frame supports are fixed, facing to each other such that one side of the membrane electrode assembly is clamped with the first conductive wire while the other side is clamped with the second conductive wire.

Within a unit cell for a fuel cell such as that described the conductive wire can be formed of a metal.

In particular the conductive wire is plated with gold.

Yet further, the unit cell for a fuel cell can comprise a reactant reservoir for feeding a fuel or oxygen-containing gas to the electrode.

Advantageously, the reactant reservoir for feeding a fuel or oxygen-containing gas to the electrode can be disposed in each side of the frame support.

The electrolyte membrane can preferably comprise a solid polymer electrolyte membrane.

The invention can also comprise a fuel cell having a unit cell as described above.

In particular the invention can provide for a fuel cell comprising a plurality of unit cells comprising an electrolyte membrane and a pair of electrodes sandwiching the electrolyte membrane on its sides as a unit of membrane electrode assembly; a conductive wire forcedly contact with each of the pair of electrodes in each unit cell; and a support for fixing the conductive wires;
wherein the plurality of unit cells are disposed such that the membrane electrode assemblies are in the same plane; and
the membrane electrode assemblies in the individual unit cells are fixed by the conductive wires sandwiching each assembly for electrically interconnecting the unit cells.

Preferably, the conductive wire acts as a current collector.

Advantageously, the plurality of unit cells are electrically interconnected in series; and
adjacent two unit cells are electrically interconnected by a conductive wire common to both unit cells, which is forcedly contact with the electrode in the front side of one unit cell and with the electrode in the rear side of the other cell.

The plurality of unit cells can be aligned as two lines in a first direction; adjacent two unit cells are alternately interconnected in the first direction and a second direction perpendicular to the first direction; and both ends of the conductive wire connecting these two unit cells are fixed on the support.

In one arrangement, the plurality of unit cells can share a single electrolyte membrane.

The aforementioned fuel cell can advantageously comprise a reinforcing member on a region in the electrolyte membrane between two adjacent unit cells;
wherein the conductive wire connecting these two adjacent unit cells penetrates the reinforcing member.

The support can have a frame shape.

Still further, the fuel cell can comprise a reactant reservoir for feeding a fuel or oxygen-containing gas to the electrode, wherein the storage space in the reactant reservoir is shared by all of the plurality of unit cells.

As noted the conductive wire can be made of a metal, and can comprise a strand of metal fibers.

Within the fuel cell the electrolyte membrane can comprise a solid polymer electrolyte membrane.

As will be appreciated within a unit cell for a fuel cell embodying the invention, an MEA is fixed by clamping with a conductive wire. This conductive wire corresponds to a convex in a conventional separator, but does not come into surface-contact with the MEA so that an area for pressing the MEA may not be unduly increased. In addition, a clamping area in the MEA can be uniformly pressed. It may result in smooth and efficient feeding of reactants to an electrode and discharge of products from the electrode. Thus, there may be provided a unit cell for a fuel cell with good properties and an improved fuel cell comprising the unit cell as a component.

According to this invention, a conventional separator which needs complicated processing can be eliminated, resulting in reduction in manufacturing cost. Furthermore, since a conductive wire can be used as a current collector, it is not necessary to use a separate member as a current collector, resulting in a compact cell structure. The conductive wire may be made of a metal to ensure high strength and facilitate a plating process. Thus, its surface may be subjected to anti-corrosive plating such as gold plating to improve corrosion resistance.

According to this invention, an MEA can be fixed by clamping with a conductive wire and the conductive wire can be used for interconnecting unit cells, allowing a flat stack structure to be compact and light and thus resulting in increase in an energy density of the fuel cell.

The invention is described further hereinafter, by way of example only, with reference to the accompanying drawings, in which:
FIG. 1 illustrates a unit cell for a fuel cell according to an example of the invention.
FIG. 2 is a perspective projection showing a fixing structure of a conductive wire to a support.
FIG. 3 is a perspective view showing an exemplary configuration of a unit cell for a fuel cell according to this invention.
FIG. 4 is a perspective view showing another exemplary configuration of a unit cell for a fuel cell according to this invention.
FIG. 5 is a graph summarizing the discharge properties for Examples 1 - 5 and Comparative Example.
FIG. 6 shows voltage variation over time during discharge at 25 mA/cm² in Examples 1 and 2.
FIG. 7 is a perspective view of a separator used in Comparative Example.
FIG. 8 is a perspective view showing the structure of a conventional solid polymer type fuel cell.
FIG. 9 is a plan view showing the structure of a fuel cell according to this invention.
FIG. 10 is a plan view of a membrane electrode assembly (MEA) used in a fuel cell according to this invention.
FIG. 11 is a partial plan view of a reinforcing plate used in a fuel cell according to this invention.
FIG. 12 is a sectional view showing the structure of a fuel cell according to this invention.
FIG. 13 is an enlarged partial sectional view showing the structure of a fuel cell according to this invention.
FIG. 14 is an enlarged partial sectional view of a region near a fixing part of a conductive wire to a support in a battery structure of this invention.
FIG. 15 is an enlarged partial sectional view of a region near a fixing part of a conductive wire to a support in a battery structure of this invention.
FIG. 16 is an enlarged partial sectional view of a region near a reinforcing plate in a battery structure of this invention.
FIG. 17 is a partial plan view of a current collecting terminal used in a fuel cell of this invention.
FIG. 18 illustrates a flat stack structure in a conventional fuel cell.
FIG. 19 shows output properties for the fuel cells in Examples and Comparative Example.
FIG. 20 illustrates a laminated stack structure in a conventional fuel cell.

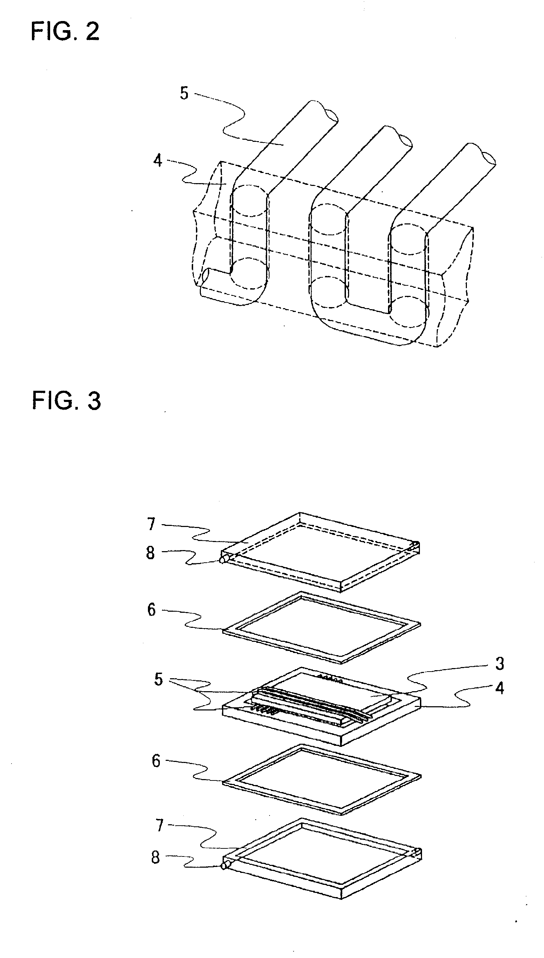

FIG. 1 illustrates a unit cell for a solid polymer type fuel cell according to an embodiment of this invention. FIG. 1(a) is a perspective view, FIG. 1(b) is a partial plan view, and FIG. 1(c) is a partial sectional view. FIG. 1(a) shows only a part of a conductive wire 5 for convenience in illustration. FIG. 2 is a perspective projection of a fixing structure for the conductive wire 5 to a support 4 in FIG. 1. FIG. 2 is an enlarged view of the fixing part, in which the support 4 is illustrated with a broken line and a conductive wire 5 is shown in a fixed state. In these figures, "1" denotes a solid polymer electrolyte membrane, "2" denotes an electrode, "3" denotes a membrane electrode assembly (MEA) in which an electrode is disposed in each side of the solid polymer electrolyte membrane, "4" denotes a support and "5" denotes a conductive wire.

As shown in FIG. 1, the support 4 has a rectangular frame shape, where through-holes having a larger diameter than an outer diameter of the conductive wire 5 are formed at given intervals in each edge of the support 4. The conductive wire 5 extends through a through-hole in one edge of the support toward the opposite edge, then through a through-hole in the opposite edge, then through a neighboring through-hole as shown in FIG. 2 toward the original edge facing the edge, and then through another through-hole in the original edge. After repeating the manipulation, the wire is stretched between the facing edges at given intervals. A fixing end of the conductive wire to the support may be firmly fixed without slack using fastening means such as a caulking member.

The MEA 3 is disposed on the conductive wire stretched over the support. Herein, for avoiding mixing of a fuel fed to a fuel electrode side with oxygen fed to an oxygen electrode side due to leaking, the MEA 3 is disposed such that the whole periphery of the electrolyte membrane 1 in the MEA 3 is superposed on the support (FIGs. 1(b) and 1(c)).

Then, as described above, a conductive wire 5 is stretched at given intervals between the other pair of edges in the support 4 such that the wire intersects with (in this figure, orthogonal to) the conductive wire previously stretched via the MEA 3.

Thus, an MEA fixing structure can be provided, where the MEA 3 is disposed on the same support 4 and fixed between the longitudinal and the transverse conductive wires as shown in FIG. 1(b). In the configuration, one MEA needs one support 4. According to such a configuration, a tension in the conductive wire may be appropriately adjusted to contact the conductive wire with the MEA at an adequate pressure. Furthermore, without using a conventional separator having a complicated structure, the clamping area of the MEA can be uniformly pressed. In addition, the number of components constituting a unit cell can be reduced.

FIG. 3 is a perspective view of an exemplary unit cell for a fuel cell having an MEA fixing structure shown in FIG. 1. In FIG. 3, "3" denotes an MEA, "4" denotes a support, "5" denotes a conductive wire, "6" denotes a sealer, "7" denotes a tank for feeding a reactant to an electrode, and "8" denotes an inlet/outlet for feeding a reactant or discharging a product.

On each side of the MEA fixing structure shown in FIG. 1, a tank 7 is disposed and fixed via a sealer 6, and there are formed a terminal connected to the conductive wire 5 in contact with a fuel electrode in the MEA 3 and a terminal connected to the conductive wire 5 in contact with an oxygen electrode.

Hydrogen is fed from one inlet/outlet 8 in the tank 7 in the fuel electrode side, while oxygen (or air) is fed from one inlet/outlet 8 in the tank 7 in the oxygen electrode side. Products generated from each electrode reaction are discharged from the other inlet/outlet 8 in each tank.

A single unit cell for a fuel cell or, if necessary, a plurality of interconnected unit cells as described above may be equipped with required components to provide a solid polymer type fuel cell.

Although a frame support which is open in both sides is used as a support in the above embodiment, it may be contemplated to use a box where one side of a frame support is closed while the other side is open. A part constituting a peripheral side of the box may be used as a support. In such a case, a storage space for storing a reactant is formed between the MEA and the box, and the space may be used as the above tank. In the other open side of this support, an analogous tank as described in the above example may be disposed.

The conductive wire in contact with one or the other electrode may be a single continuous wire as in the above embodiment. Alternatively, each conductive wire may be formed with a plurality of wires. In such a case, a current collecting terminal may be a conductive member electrically interconnecting a plurality of mutually adjacent conductive wires at the fixing parts of the wires in the support.

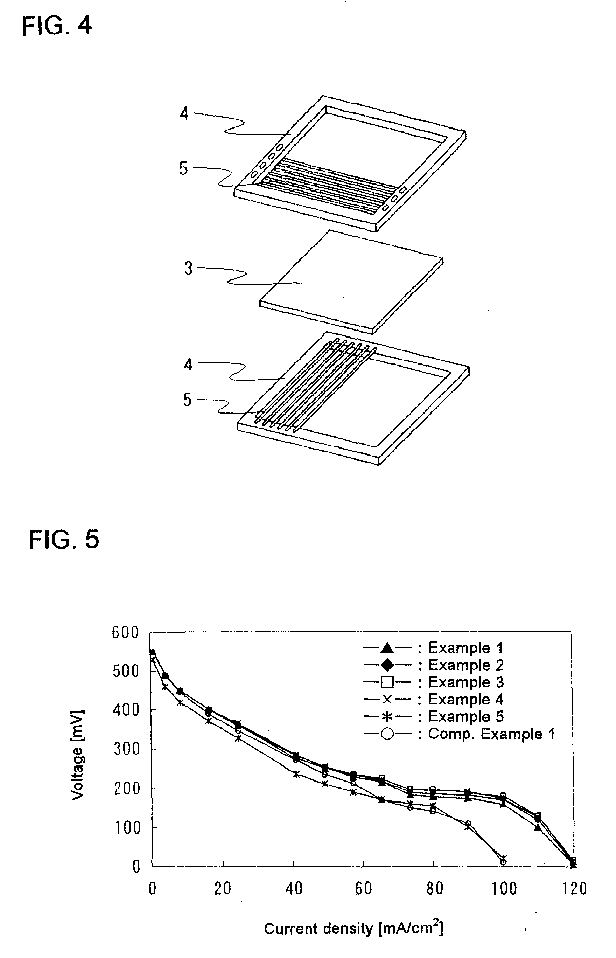

FIG. 4 shows another embodiment of an MEA fixing structure. In this embodiment, a conductive wire 5 is stretched at given intervals over each of a pair of separate supports 4. In this figure, "3" denotes an MEA, "4" denotes a support, "5" denotes a conductive wire. The figure illustrates a part of the conductive wire 5.

In this structure, a pair of the supports 4 are superposed such that the sides in which the conductive wire 5 is stretched face to each other, and an MEA 3 is disposed between them. They are then fixed using a fixing member such as bolts and nuts. Thus, the conductive wires 5 are forcedly in contact with the MEA 3 for fixing the MEA. Although the conductive wire 5 is stretched in one direction in the support in this embodiment, the conductive wire 5 may be stretched in both longitudinal and transverse directions like a web. Using such a configuration, the clamping area in the MEA may be uniformly pressed without using a conventional separator having a complicated structure.

Such a MEA fixing structure may be, as described with reference to FIG. 3, provided with components such as a sealer, a tank and a terminal to provide a unit cell for a fuel cell and a fuel cell therewith.

There will be described a flat stack structure according to this invention.

One of the main features in a flat stack structure of this invention is that a plurality of unit cells, each of which comprises an MEA and conductive wires sandwiching the MEA and forcedly contact with both sides of the MEA for fixing, are disposed in the same plane and these unit cells are electrically interconnected with the conductive wires.

There will be described an embodiment where six unit cells are interconnected in series.

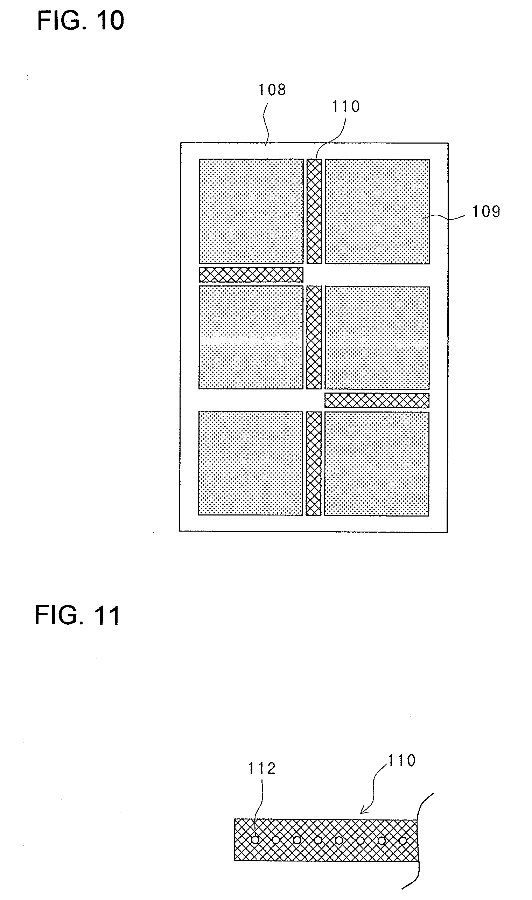

As shown in FIG. 10, six pairs of electrodes 109 are formed on a solid polymer electrolyte membrane 108 to prepare an MEA. The MEA comprises six MEA units, each of which consists of a pair of electrodes and an electrolyte membrane intervening between the electrodes, and one MEA unit constitutes one unit cell. Then, for preventing damage to the electrolyte membrane, a reinforcing plate 110 shown in FIG. 11 is disposed and glued as shown in FIG. 10. The reinforcing plate 110 is separate from a support 107 and has through-holes 112 at given intervals for passing a conductive wire. The reinforcing plate is preferably thinner than the electrode in the light of adequate contact of the conductive wire with the electrode in the MEA.

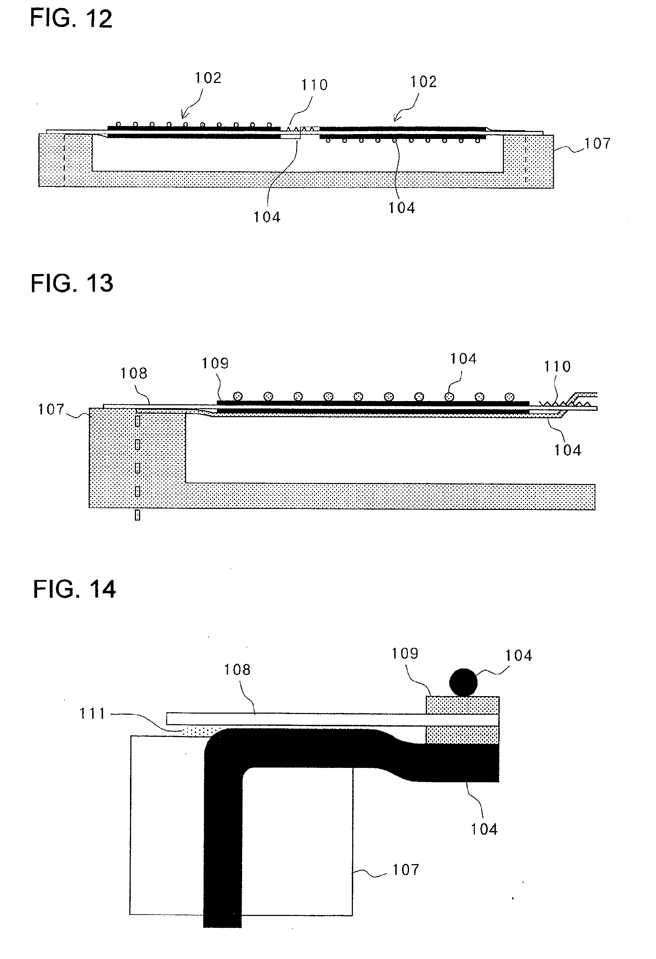

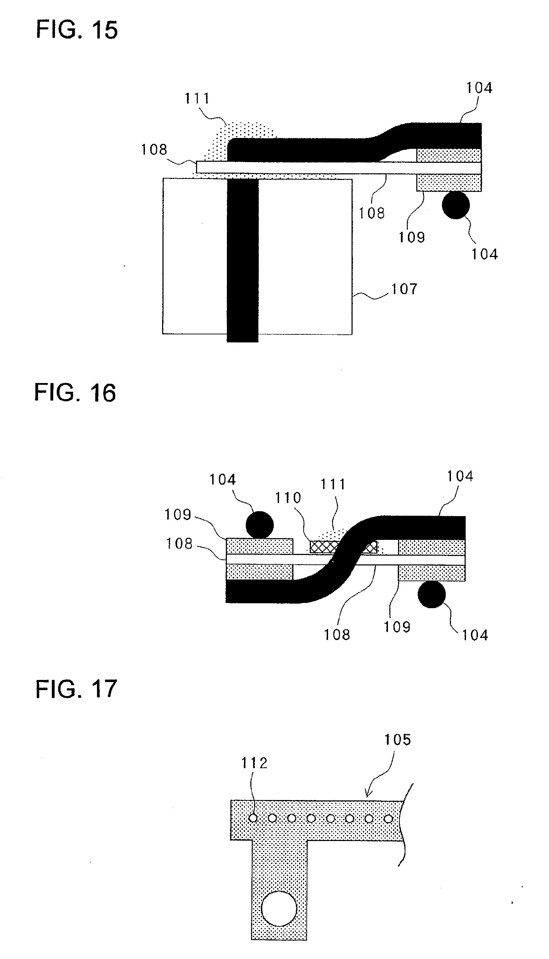

Then, the MEA having six pairs of electrodes is fixed on the support using the conductive wires. FIGs. 9 and 12 to 16 show a fixed MEA. FIG. 9 is a plan view, FIG. 12 is a sectional view, FIG. 13 is an enlarged partial sectional view, FIGS. 14 and FIG. 15 are enlarged partial sectional views showing a region near a fixing part of a conductive wire to a support, and FIG. 16 is an enlarged partial sectional view showing a region near a reinforcing plate. In these figures, "104" denotes a conductive wire, "105" denotes a current collecting terminal, "106a" denotes a fuel inlet, "106b" denotes an outlet, "107" denotes a support (insulating frame), "107b" denotes a branch support, "108" denotes a polymer solid electrolyte membrane, "109" denotes an electrode, "110" denotes a reinforcing plate, "111" is an adhesive. In FIG. 9, an electrolyte membrane 108 is not shown.

As shown in FIG. 9, an insulating frame surrounding the six pairs of electrodes may be used as a support 107. This support may comprise through-holes for passing a conductive wire at given intervals (in this figure, an equal interval). As shown in FIG. 14, it is desirable to form, in the support, a trench capable of receiving the conductive wire in an area where the conductive wire is disposed under the electrolyte membrane 108. Thus, adhesion of the electrolyte membrane to the support may be further improved for more reliable airtightness.

As shown in FIG. 12, the support 107 may be a box where one side is closed while the other side is open. The part constituting the peripheral side of the box is utilized as a main support. A part surrounding the space formed by the box and the MEA is a reactant reservoir for feeding a reactant (fuel or oxygen) to an electrode. The box (support) may comprise, as shown in FIG. 9, a fuel inlet and an outlet. On the open side of the box, another box with one open side as a reactant reservoir for feeding a reactant to an electrode may be placed. The box may comprise an inlet and an outlet.

A support may have two open sides. In such a case, on the open side of a box with one open side as a reactant reservoir for feeding a reactant to an electrode may be placed. The reactant reservoir is preferably provided at least in the fuel electrode side of the support, but may be provided in both sides. These boxes may comprise an inlet and an outlet.

The storage space in the reactant reservoir may be shared by all of the unit cells fixed on the support to efficiently feed a reactant and discharge products.

As shown in FIG. 9, these unit cells are longitudinally aligned in two lines and electrically interconnected in series. In this serial interconnection, adjacent unit cells are alternately interconnected in a transverse and a longitudinal directions, via conductive wires. In this case, the longitudinal conductive wire forcedly contact with the end unit cells in the serial interconnection is fixed at its ends on the support 107 and its branch support 107a. The conductive wire interconnecting adjacent two unit cells is fixed at its ends on the support 107 (or on the support 107 and its branch support 107a). In this figure, the ends of the transverse conductive wire are fixed on the longitudinal edges in the frame support 107, respectively while the ends of the longitudinal conductive wire are fixed on the transverse edge in the frame support 107 and the branch support 107a, respectively. When the number of unit cells is more than 6, an additional branch support is provided, on which one end of the conductive wire interconnecting adjacent two unit cells is fixed.

The conductive wire 104 may be fixed on the support 107 (or branch support 107a) by fastening means such as a caulking member.

The electrolyte membrane 108 may be fixed on the support 107 (or the branch support 107a) using an adhesive. When fixing the electrolyte membrane, it is preferable that the whole periphery of the electrolyte membrane is superposed on the support as shown in FIGs. 4 to 7, for avoiding mixing of a fuel fed to a fuel electrode side with oxygen fed to an oxygen electrode side due to leaking.

A battery structure according to this invention will be further described while illustrating a manufacturing process. For convenience of explanation, the positions of unit cells in FIG. 9 which corresponds to the positions of the electrode 109 are referred to as an upper-left, an upper-right, a middle-left, a middle-right, a lower-left and a lower-right positions.

First, ten conductive wires having fastening means such as a caulking member are passed through the through-holes formed at equal intervals in the longitudinal frame of the support on the left of the lower-left position from the rear side to the front side, and each of the wires are fitted in a trench formed in the front surface of the frame. These conductive wires are lower transverse wires.

Next, an adhesive is applied to the upper, the lower and the left parts of the support frame at the lower-left position, to which is then glued a lower-left electrolyte membrane part in an MEA. At the lower-left position, the transverse conductive wire is placed in the rear side of the electrolyte membrane (FIG. 14).

Then, ten conductive wires having fastening means such as a caulking member are passed through the through-holes formed at equal intervals in the transverse frame of the support under the lower-right position from the rear side to the front side, and each of the wires are fitted in a trench formed in the front surface of the frame. These conductive wires are longitudinal wires extending from the lower-right position to the middle-right position. At the lower-right position, the longitudinal conductive wire is placed in the rear side of the electrolyte membrane.

Then, the conductive wires in the rear side of the electrolyte membrane at the lower-left position are passed through the electrolyte membrane 108 and the reinforcing plate 110 at the center of the lower part, to the front side (FIG. 16). Subsequently, an adhesive is applied to the lower and the right support frames at the lower-right position, to which an electrolyte part of the MEA at the lower-right position (FIG. 14).

Next, the conductive wires whose ends are now in the front side through the electrolyte membrane and the reinforcing plate are passed through the through-holes at equal intervals in the longitudinal frame of the support in the right side at the lower-right position from the front side to the rear side, then stretched under an adequate tension without slack and fixed by fastening means such as a caulking member. Then, if necessary, an adhesive is applied (FIG. 15). In the light of fixing and effective sealing, it is preferable to also apply an adhesive to the penetrating part of the conductive wires in the reinforcing plate 110 (FIG. 16).

Then, in a similar manner, the MEA and the conductive wires are fixed on the support at the lower-right, the middle-right, the middle-left, the upper-left and the upper-right positions in sequence. Next, for fixing and current collection, longitudinal conductive wires are placed at the lower-left and the upper-right positions. In the process, for example as illustrated in FIG. 9, a current collecting terminal 110 having through-holes 112 corresponding to the through-holes formed in the support frame may be prepared; conductive wires with fastening means such as a caulking member may be passed through the through-holes in both of the current collector terminal and the support frame; the current collector terminal 110 may be fixed between the support frame and the fastening means to be contact-connected with the conductive wires.

The conductive wires and each set of electrodes in the MEA are positioned such that at the lower-left, the middle-right and the upper-left positions, the longitudinal conductive wires are forcedly contact with the front electrode (e. g., an oxygen electrode) in the MEA while the transverse conductive wires are forcedly contact with the rear electrode (e. g., a fuel electrode) in the MEA, and at the lower-right, the middle-left and the upper-right positions, the transverse conductive wires are forcedly in contact with the front electrode (e. g., an oxygen electrode) in the MEA while the longitudinal conductive wires are forcedly in contact with the rear electrode (e.g., a fuel electrode) in the MEA.

In the above configuration, a fuel cell may be operated by feeding a fuel from an inlet 106a, which is then contacted with a fuel electrode (a rear electrode in an MEA) and discharged together with products from an outlet 106b while contacting an oxygen electrode with the air. Alternatively, a fuel cell may be operated by providing a reactant reservoir in an oxygen electrode side (front side) and contacting an oxygen-containing gas forcibly fed from an inlet with the oxygen electrode.

A conductive wire used in this invention may be appropriately selected, depending on some factors such as conductivity, strength and the size of an MEA, but when using a single wire, it may have, for example, a major axis of 10 to 1000 µm. For a strand consisting of multiple filaments, these filaments may have a major axis of 1 to 100 µm.

This invention is particularly effective for a solid polymer type fuel cell comprising a solid polymer electrolyte membrane as an electrolyte, but it may be applied to another type fuel cell such as a fused carbonate type, a solid oxide type and a phosphate type fuel cells comprising, as an electrolyte, a carbonate, a solid oxide and a phosphate, respectively.

This invention may be also applied to a fuel cell using a modified hydrogen source other than hydrogen such as methanol, natural gas and naphtha as a fuel or a fuel cell using the air, other than oxygen, as an oxidizing agent.

The invention will be more specifically described with reference to the following examples.

### Example 1

First, a process for manufacturing an electrode will be described. A dispersion of polytetrafluoroethylene (hereinafter, referred to as "PTFE") was mixed with Ketjen Black to prepare a slurry, which was then applied to a carbon-fiber nonwoven fabric, dried and baked to provide a diffusion layer. The carbon-fiber unwoven fabric and PTFE were used as a substrate and a water repellent, respectively.

To the diffusion layer thus formed was applied a slurry prepared by mixing a PtRu-supported carbon catalyst and a Nafion® solution (DuPont, a solution of a sulfonated polyfluoroolefin), which was then dried to form a fuel electrode. Separately, to the diffusion layer was applied a slurry of a Pt-supported carbon catalyst in the Nafion® solution, which was then dried to form an oxygen electrode. The solid polymer electrolyte membrane was Nafion® 117 (DuPont, a sulfonated polyfluoroolefin membrane).

These electrodes and the solid polymer electrolyte membrane were laminated and hot pressed to give an MEA. The size of the electrode unit was 35 mm × 35 mm and the size of the solid electrolyte membrane was 46 mm × 46 mm.

The solid polymer type fuel cell of this example was configured as a direct methanol type fuel cell utilizing a direct reaction of methanol with water in a catalyst layer, where the fuel and oxygen were fed without pressure.

Then, the MEA was fixed on the support as shown in FIGs. 1 and 2. The support 4 was made of a PEEK® polymer (Victrex plc). The support was square frame having an outer diameter of 55 mm × 55 mm, an inner diameter of 40 mm × 40 mm and a thickness of 5 mm. All of the edges of the support had through-holes with an inner diameter of 1 mm at certain intervals for passing a conductive wire. The conductive wire was a stainless steel wire with an outer diameter of 0.5 mm. The solid electrolyte membrane was fixed such that the periphery of the solid electrolyte membrane was superposed on the support without a gap between them for avoiding leaking of the fuel to the oxygen electrode. The conductive wire penetrated of the electrolyte membrane in the MEA. The support 4 may be made of a Polyacetal (POM).

Then, as shown in FIG. 3 described above, tanks 7 were mounted on both sides of the MEA 3 fixed on the support 4 via individual sealers 6 to provide a unit cell for a solid polymer type fuel cell. A terminal was mounted on the conductive wire exposed in the support surface opposite to that where the MEA was mounted.

In this example, as shown in FIG. 3, the longitudinal and the transverse conductive wires were fixed on the same side of the same support, and the MEA was disposed and fixed between the longitudinal and the transverse conductive wires. Thus, the number of components can be reduced and a pressure can be efficiently applied to the MEA.

Although the sealer 6 was made of a styrene-butadiene synthetic rubber and used in combination with an adhesive for sealing in this example, a tank may be made of a rubbery material, allowing the joint to function as sealing means.

### Example 2

A solid polymer type fuel cell was prepared as described in Example 1, except that a conductive wire was plated with gold.

### Example 3

A solid polymer type fuel cell as described in Example 2, except that a gold-plated mesh was disposed between a conductive wire and an MEA for reducing a contact resistance between the MEA and the conductive wire.

### Example 4

A solid polymer type fuel cell as described in Example 2, except that in place of a gold-plated stainless mesh in Example 3, a graphite felt was disposed between a conductive wire and an MEA

### Example 5

As shown in FIG. 4 described above, a pair of supports over which conductive wires are stretched were used to fix an MEA. The conductive wire was a gold-plated stainless wire with an outer diameter of 0.5 mm as described in Example 2. A solid polymer type fuel cell was prepared as described in Example 2, except that the MEA was sandwiched between the pair of supports such that the sides of the support having the conductive wires faced to each other, and the MEA was fixed at four corners of the supports using bolts and nuts.

### Comparative Example 1

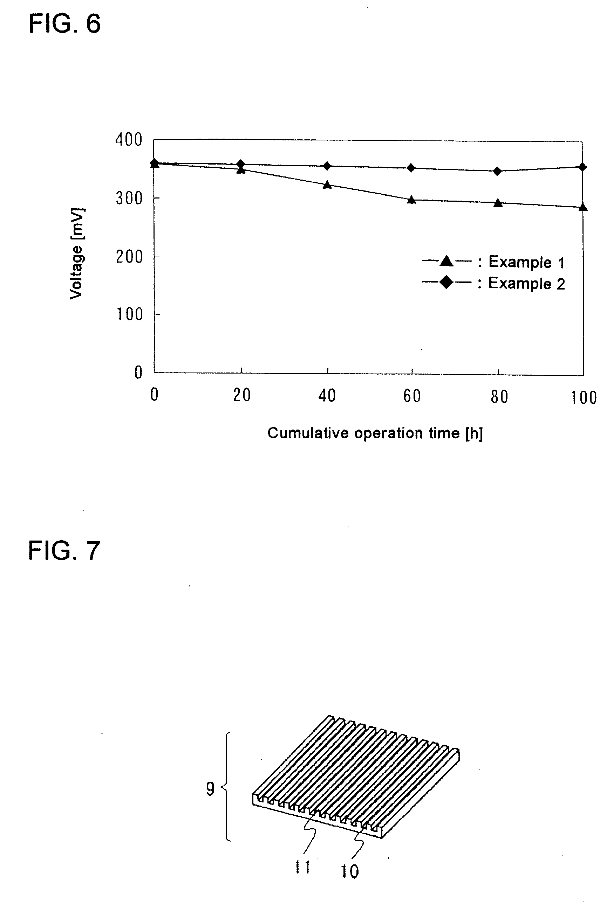

A solid polymer type fuel cell was prepared, which comprised a stainless separator having a conventional shape as shown in FIG. 7, in which "9" denotes a separator, "10" denotes a trench, and "11" denotes a convex.

Using an MEA having a configuration as described in Example 1, separators were disposed and fixed such that a convex was fit to each side of the MEA. The cell was operated by feeding a fuel to the trench of the separator in the fuel electrode side while feeding oxygen to the trench of the separator in the oxygen electrode side.

### Evaluation of the cells in Examples 1 to 5 and Comparative Example 1 for their discharge properties

FIG. 5 shows the discharge properties of the cells in Example 1 to 5 and Comparative Example 1. Table 1 shows the voltage results determined at a current density of 90 mA/cm² for the cells in Examples 1 to 5 and Comparative Example 1.

**Table 1**

| | Voltage [mV] |
|---|---|
| Example 1 | 175 |
| Example 2 | 182 |
| Example 3 | 190 |
| Example 4 | 191 |
| Example 5 | 100 |
| Comparative Example 1 | 110 |

From the results shown in FIG. 5 and Table 1, it is demonstrated that while a voltage in Comparative Example 1 is 110 mV at a current density of 90 mA/cm², all of Examples 1 to 4 give a higher value. Furthermore, while a critical current density, i. e., a current density at which a voltage is substantially zero, is about 100 mA/cm² in Comparative Example 1, all of Examples 1 to 4 give a significantly higher value.

It may be speculated that such significant improvement in a high current density would be obtained because while the MEA was clamped under an uniform and adequate pressure, the reactants, i. e., the fuel and oxygen were sufficiently fed to quickly discharge the products. In contrast, Example 5 gave the properties not so different from those for Comparative Example 1. It might be because the structure shown in FIG. 4 used in Example 5 would fail to apply an adequate pressure to the MEA in comparison with the structure shown in FIG. 1 used in Examples 1 to 4. However, the structure in Example 5 can be used to provide a fuel cell without a conventional separator while maintaining good battery properties.

In Example 2, the conductive wire was plated with gold to reduce a contact resistance between the conductive wire and the MEA, resulting in better properties than those in Example 1. Furthermore, Examples 3 and 4 gave further improved properties in relation to Example 2. It might be because a gold-plated mesh or graphite felt disposed between the conductive wire and the MEA would adequately press the area where the MEA is not in contact with the conductive wire to reduce a resistance, resulting in an improved current collection efficiency.

FIG. 6 shows voltage variation over time in discharge using the cells in Examples 1 and 2 at 25 mA/cm². While Example 1 shows a voltage decline over long-term use, voltage reduction is prevented in Example 2. These results demonstrate that plating of a conductive wire with gold can prevent corrosion of the surface of the conductive wire to inhibit increase in a contact resistance between an MEA and the conductive wire over long-term use.

### Example 6

First, a process for manufacturing an electrode will be described. A dispersion of polytetrafluoroethylene (hereinafter, referred to as "PTFE") was mixed with Ketjen Black to prepare a slurry, which was then applied to a carbon-fiber nonwoven fabric (carbon paper), dried and baked to provide a diffusion layer. The carbon-fiber unwoven fabric and PTFE were used as a substrate and a water repellent, respectively.

To the diffusion layer thus formed was applied a slurry prepared by mixing a PtRu-supported carbon catalyst and a Nafion® solution (DuPont, a solution of a sulfonated polyfluoroolefin), which was then dried to form a fuel electrode. Separately, to the diffusion layer was applied a slurry of a Pt-supported carbon catalyst in the Nafion® solution, which was then dried to form an oxygen electrode. The solid polymer electrolyte membrane was Nafion® 115 (DuPont, a sulfonated polyfluoroolefin membrane).

Then, as shown in FIG. 10, six sets of electrodes were combined with a sheet of electrolyte membrane by hot press. Each electrode had a size of 40 mm × 40 mm. Then, for preventing the electrolyte membrane from being damaged, a reinforcing plate 110 shown in FIG. 11 was disposed only in the oxygen electrode side of the membrane and they were glued together as shown in FIG. 10. The reinforcing plate was thinner than the electrode.

Using a stainless (SUS 316L) wire with a wire diameter of 500 µm as a conductive wire, a solid polymer type fuel cell was prepared, following the procedure described with reference to FIGS. 9 to 17.

A 2M aqueous solution of methanol was circulated by feeding it from an inlet 106a and discharged from an outlet 106b while the oxygen electrode was contacted with the air, to operate the fuel cell.

### Example 7

A fuel cell was prepared and operated as described in Example 6, except that a gold-plated copper wire with a wire diameter of 500 µm was used as a conductive wire.

### Example 8

A fuel cell was prepared and operated as described in Example 6, except that a stainless (SUS 316L) strip-shaped wire with a width of 3 mm and a thickness of 0.2 mm was used as a conductive wire and six wires were forcedly contact with one side of a unit cell in place of ten wires.

### Example 9

A fuel cell was prepared and operated as described in Example 8, except that a gold-plated copper strip-shaped wire with a width of 3 mm and a thickness of 0.2 mm was used as a conductive wire.

### Example 10

A fuel cell was prepared and operated as described in Example 1, except that a thread wire with a diameter of 1 mm which is a strand consisting of stainless (SUS 316L) filaments with a diameter of 12 µm (Nippon Seisen Co., Ltd.) was used as a conductive wire.

### Example 11

A fuel cell was prepared and operated as described in Example 1, except that a strip-shaped wire with a width of 4 mm which is a strand consisting of stainless (SUS 316L) filaments with a diameter of 12 µm (Nippon Seisen Co., Ltd.) was used as a conductive wire.

### Comparative Example 2

A fuel cell was prepared, which had a flat stack structure as described above with reference to FIG. 18. Six MEAs consisting of electrodes and an electrolyte membrane as described in Example 6 were prepared and interconnected in series. One sheet of electrolyte membrane was used for one pair of the electrodes, i. e., six electrolyte membranes in total. The fuel cell was operated as described in Example 1.

### Comparative Example 3

A fuel cell having a laminated stack structure as described with reference to FIG. 20 was prepared. Six MEAs consisting of electrodes and an electrolyte membrane as described in Example 6 were prepared and interconnected in series. One sheet of electrolyte membrane was used for one pair of the electrodes, i. e., six electrolyte membranes in total.

### Volume and weight of a fuel cell

Table 2 shows volumes and weights of the fuel cells in Examples 6 and 8 and Comparative Examples 2 an 3. From comparing these results, it is obvious that this invention can provide a fuel cell smaller and lighter than a conventional fuel cell. The fuel cell in Comparative Example 2 having a flat stack structure must be uniformly pressed by a significant external pressure for reducing a contact resistance between the plate electrode and the MEA electrode. Thus, the fuel cell in Comparative Example 2 requires a pressing plate 114 and a screw 115 for fixing the plate, resulting in increase in its volume and weight. The fuel cell in Comparative Example 3 requires a separator between unit cells, resulting in increase in its volume and weight.

**Table 2**

| | Example 6 | Example 8 | Comp. Exam. 2 | Comp. Exam. 3 |
|---|---|---|---|---|
| Volume [cm³] | 110 | 110 | 170 | 250 |
| Weight [g] | 288 | 310 | 436 | 635 |

### Output properties of a fuel cell

FIG. 19 shows the output properties for the fuel cells in Examples 6 to 11 and Comparative Example 2. Example 8 shows properties comparable to Comparative Example 2. The other examples show better properties than Comparative Example 2. It might be speculated that power was collected using a strip-shaped wire and a plate electrode in Example 8 and Comparative Example 2, respectively, resulting in a larger area covering the MEA and thus inhibition of fuel or oxygen feeding. In contrast, Examples 6, 7 and 10 employed a wire with a smaller diameter, resulting in a relatively smaller area covering the MEA and thus inhibition of output reduction due to diffusion control of a fuel or oxygen. Example 11 used a strip-shaped wire as a conductive wire. However, since the wire is a strand consisting of filaments, a fuel or oxygen can pass through a space between filaments. Thus, in conjunction with its flexibility, it substantially prevents output reduction.

Comparing Examples 6 and 8 with Examples 7 and 9, respectively, it is demonstrated that a conductive wire can be plated with gold to reduce a contact resistance and to improve output properties.

Examples 10 and 11 employed a strand consisting of filaments with higher flexibility. Thus, the strand was adequately contacted with the electrodes in the MEA to give improved output properties.

Although a direct methanol type fuel cell in which methanol is directly reacted has been described in the above examples, this invention may be similarly applicable to a solid polymer type fuel cell using hydrogen gas as a fuel.

## Claims

1. A unit cell for a fuel cell and including a membrane electrode assembly comprising an electrolyte membrane and a pair of electrodes sandwiching the electrolyte membrane and comprising conductive wires contacting the sides of the membrane electrode assembly, and a frame support to which the conductive wires are mounted.

2. A unit cell as claimed in Claim 1, wherein conductive wires are in contact with both sides of the membrane electrode assembly and are fixed to the same support.

3. A unit cell as claimed in Claim 1 or 2, wherein the conductive wire acts as a current collector.

4. A unit cell as claimed in Claim 1, 2 or 3, wherein the conductive wires comprise a first conductive wire intersecting the frame multiple times and which is fixed on the frame support and a second conductive wire that crosses over the fist conductive wire and intersecting the frame multiple times and which is fixed on the frame support in the side in which the first conductive wire is disposed;
wherein one side of the membrane electrode assembly is clamped with the first conductive wire while the other side is clamped with the second conductive wire so that the membrane electrode assembly is fixed between the first and second conductive wires.

5. A unit cell as claimed in Claim 4, wherein the membrane electrode assembly is disposed such that the whole periphery of the electrolyte membrane is superimposed on the frame support.

6. A unit cell as claimed in Claim 1, 2 or 3, wherein the frame support comprises first and a second frame supports and the conductive wires comprise a first conductive wire intersecting the frame multiple times and which is fixed on the first frame support in one side of the frame support and a second conductive wire intersecting the region within the frame multiple times, which is fixed on the second frame support in one side of the frame support;
wherein the membrane electrode assembly is disposed between the first and the second conductive wires; and the first and the second frame supports are fixed, facing to each other such that one side of the membrane electrode assembly is clamped with the first conductive wire while the other side is clamped with the second conductive wire.

7. A unit cell as claimed in any one or more of Claims 1 to 6, wherein the conductive wire is made of a metal.

8. A unit cell as claimed in Claim 7, wherein the conductive wire is plated with gold.

9. A unit cell as claimed in any one or more of the preceding claims and further comprising reactant reservoir means for feeding a fuel or oxygen-containing gas to the electrode.

10. A unit cell as claimed in Claim 9, wherein the reactant reservoir means for feeding a fuel or oxygen-containing gas to the electrode is located in each side of the frame support.

11. A unit cell as claimed in any one or more of the preceding claims wherein the electrolyte membrane comprises a solid polymer electrolyte membrane.

12. A fuel cell comprising a unit cell as claimed in any one or more of the preceding claims.

13. A fuel cell comprising a plurality of unit cells as defined in any one or more of Claims 1 to 11 and the conductive wire being in contact with each of the pair of electrodes in each cell; and a support for fixing the conductive wires;
wherein the plurality of unit cells are disposed such that the membrane electrode assemblies are in the same plane; and
the membrane electrode assemblies in the individual unit cells are fixed by the conductive wires sandwiching each assembly for electrically interconnecting the unit cells.

14. A fuel cell as claimed in Claim 13, wherein the conductive wire acts as a current collector.

15. A fuel cell as claimed in Claim 13 or 14, wherein the plurality of unit cells are electrically interconnected in series; and
adjacent two unit cells are electrically interconnected by a conductive wire common to both unit cells and which contacts with the electrode in the front side of one unit cell and with the electrode in the rear side of the other cell.

16. A fuel cell as claimed in Claim 15, wherein the plurality of unit cells are aligned as two lines in a first direction; adjacent two unit cells are alternatively interconnected in the first direction and a second direction perpendicular to the first direction; and both ends of the conductive wire connecting these two unit cells are fixed on the support.

17. A fuel cell as claimed in Claim 13, 14, 15 or 16, wherein the plurality of unit cells share a single electrolyte membrane.

18. A fuel cell as claimed in claim 17 and including a reinforcing member on a region in the electrolyte membrane between two adjacent unit cells;
wherein the conductive wire connecting the two adjacent unit cells penetrates the reinforcing member.

19. A fuel cell as claimed in Claim 13, 14, 15, 16, 17 or 18 wherein the support has a frame shape.

20. A fuel cell as claimed in Claim 13, 14, 15, 16, 17, 18 or 19, wherein the storage space in the reactant reservoir means is hared by all of the plurality of unit cells.

21. A fuel cell as claimed in Claim 13, 14, 15, 16, 17, 18, 19 or 20 wherein the conductive wire comprises a strand of metal fibers.

22. A fuel cell as claimed in any one or more of Claims 13 to 21 wherein the electrolyte membrane comprises a solid polymer electrolyte membrane.
